# EUROPÄISCHE PATENTSCHRIFT

(11) **EP 0 813 832 B1**
(45) Veröffentlichungstag und Bekanntmachung des Hinweises auf die Patenterteilung: **28.07.2004**
(21) Anmeldenummer: 97108219.3
(22) Anmeldetag: 21.05.1997
(51) Int. Cl.: A47B 77/00, F16B 12/48, F16B 12/42

(54) **Möbelsystem, insbesondere Küchenmöbelsystem**
Furniture system, especially kitchen furniture system
Système de meubles, en particulier, système de meubles pour cuisines

(30) Priorität: 20.06.1996 DE 19624673
(43) Veröffentlichungstag der Anmeldung: 29.12.1997
(73) Patentinhaber: Bulthaup GmbH & Co. KG, 84153 Aich (DE)
(72) Erfinder: Langer, Otto, 84494 Neumarkt-St. Veit (DE); Wudy, Johann, 94249 Bodenmais (DE); Haberl, Thomas, 85356 Freising/Attaching (DE); Heizinger, Robert, 84494 Neumarkt-St. Veit (DE); Massanetz, Klaus, 85368 Moosburg (DE); Neumann, Rene, 84149 Eberspoint (DE)
(74) Vertreter: Laufhütte, Dieter, Dr.-Ing.

(56) Entgegenhaltungen:
- US-A- 269 907
- US-A- 3 851 601
- US-A- 4 815 727
- US-A- 4 846 078
- US-A- 4 864 795

## Beschreibung

Die Erfindung betrifft ein Möbelsystem, insbesondere Küchenmöbelsystem nach dem Oberbegriff des Patentanspruchs 1. Ein derartiges Möbelsystem ist beispielsweise aus der US 3 851 601 A bekannt.

Im Bereich der Küchenmöbel haben sich in den letzten Jahrzehnten Einbauküchen durchgesetzt. Hier handelt es sich um Küchenmöbelzeilen, die an die Raumaufteilung der Küche angepaßt sind. Die im Verbund einer Einbauküche fest verbundenen Küchenmöbel weisen nun den Nachteil einer mangelnden Mobilität auf. Dies betrifft einerseits die Möglichkeit eines innerhalb der Küche gewünschten Umstellens und Umorganisierens der Küchenmöbel. Noch häufiger ergeben sich aber die Probleme bei einem Umzug in eine andere Wohnung, der es in der Regel notwendig macht, eine vollständig neue Einbauküche in der neuen Wohnung zu installieren.

Bereits vor der Einführung von Einbauküchen war es bereits bekannt, Küchen aus Einzelmöbeln, beispielsweise Vorratsschränken, Vitrinen etc. zusammenzustellen. Bei diesen Möbeln handelte es sich allerdings um konventionelle Möbel, die häufig in ihren Abmessungen und ihrem Erscheinungsbild nicht aufeinander abgestimmt waren.

In allerjüngster Zeit gab es erste Bestrebungen, mobile Küchenelemente zur Verfügung zu stellen. In diesem Zusammenhang ist die sogenannte "Kofferküche" zu nennen, bei der Schränke und Funktionseinheiten, wie Spülmaschine, Waschmaschine, Herd in einer Art Koffergehäuse, das auf Rollen verfahrbar ist und das integrierte Klapp-Tragegriffe zum Transport der Einheit aufweist, integriert sind.

Andererseits ist im Bereich der Regal- und Büromöbel bereits ein Möbelsystem bekannt, bei dem ein selbsttragendes Grundgerüst mit über Verbindungselement miteinander verbundenen Rohren vorgesehen wird, wobei dann je nach Funktionalität in dem Grundgerüst Regalbretter, Seitenteile, Wandteile, Klappen, Einschübe oder dergleichen eingesetzt sind und wobei auch die Wandelemente statisch tragende Teile des Möbels sind. Die Verbindung der das Grundgerüst bildenden Rohre wird durch im wesentlichen kugelförmige Knotenelemente gebildet, in die die Rohre über eine endseitige Schraube eingeschraubt werden.

Aufgabe der Erfindung ist es, ein Möbelsystem mit einem selbsttragenden Grundgerüst zu entwickeln, das eine flexible Gestaltung von Küchenmöbeln unter Einbeziehung sämtlicher Funktionalitäten erlaubt, das gleichzeitig eine hohe Mobilität und Gewichtsersparnis ermöglicht und eine eigenständige und ansprechende Gestaltung aufweist.

Erfindungsgemäß wird diese Aufgabe ausgehend von einem gattungsgemäßen Möbelsystem durch die kennzeichnenden Merkmale des Hauptanspruchs gelöst. Demnach bestehen die Verbindungselemente des Grundgerüstes jeweils aus einem Formteil, das selbst als Rohr und/oder weitgehend geschlossenes Hohlprofil ausgebildet ist, an welchem zumindest ein seitlich abstehender Ansatz, der sich über die gesamte Länge des Verbindungselements erstreckt, ausgebildet ist. Die Verbindungselemente selbst sind als vertikale Bauelemente im Grundgerüst integriert, die über ihre Länge die Rohre und/oder Profile, die sie miteinander verbinden, ersetzen. Die Hohlprofile verlaufen aber im Verbindunsgelement nicht über die gesamte Länge, sondern sind jeweils nur an den Enden soweit eingeschoben, daß eine sichere Befestigung in dem Verbindungselement, beispielsweise durch Klemmen, Verschrauben etc. möglich ist. Hierdurch wird entscheidend Material und Gewicht gespart. In diesem aus genormten Teilen zusammengesetzten selbsttragenden Grundgerüst lassen sich über die mit dem Ansatz ausgebildeten Verbindungselemente sämtliche Funktionalitäten integrieren. So können Regalfächer, Seitenwände, Türen, Klappen und Beschläge, sowie Schubfächer problemlos integriert werden. Aufgrund der hohen Tragfähigkeit können auch schwere Einbaugeräte integriert werden. Die Gestaltung der Verbindungselemente ermöglicht nicht nur ein unter technischen Gesichtspunkten vorteilhaftes Baukastensystem, sondern gibt dem Möbel darüberhinaus aufgrund der Verbindung des aus einem Rohr und/oder weitgehend geschlossenen Hohlprofil mit einem daran anschließenden Ansatz eine signifikante gestalterische Note.

Vorteilhafte Ausgestaltungen der Erfindung ergeben sich aus den sich an den Hauptanspruch anschließenden Unteransprüchen.

Die horizontalen Rohre und/oder Profile, sowie eventuell eingesetzte Platten, Rahmen etc. des Grundgerüsts können am Ansatz des Verbindunsgelements befestigt sein.

Von besonderem gestalterischen Reiz ist es, wenn das Verbindungselement im Querschnitt die Form eines asymmetrischen Tropfens aufweist. Diese Formgebung ermöglicht aber auch eine sehr gute Funktionalität, da hier keine Kanten gebildet werden, die beispielsweise eine Reinigung der Oberfläche erschweren.

Das Verbindungselement kann ein rundes oder mehreckiges Hohlprofil aufweisen, das jeweils an die Form der miteinander zu verbindenden Rohre angepaßt ist.

Im Verbindungselement kann auf einer Seite des Ansatzes eine Ausnehmung zur bündigen Aufnahme von Bauteilen, wie beispielsweise Wandelementen, Böden, Rahmen, Rohre und Platten vorgesehen sein.

Außen können am Verbindungselement Verzierungen aufgebracht sein, die beispielsweise eingraviert und/oder aufgedruckt sind, um dem Möbel zusätzlich noch eine designerische Prägung zu verleihen.

Besonders vorteilhaft ist es, wenn mit den Verbindungselementen Montageplatten verbunden sind, die als solche genormte Bohrungen, Schraubbohrungen, Ausnehmungen und/oder Nuten aufweisen, die zur Aufnahme von zu montierenden Bauteilen und Beschlägen dienen. Diese Montageplatten beinhalten somit eine Reihe von Montagemöglichkeiten, die insbesondere eine Bereitstellung einer Formenvielfalt von Bauteilen für das Möbelsystem einschränken. Auch der Umbau des Möbelsystems ist durch die Mehrfachfunktionalität dieser Montageplatten erleichtert.

Gemäß einer alternativen Ausführungsform kann das Verbindungselement auch mehrteilig ausgebildet sein. So kann zwar das Verbindungselement als solches eine Tropfenform aufweisen, jedoch eine von außen zu befestigende aufklemmbare Sichtblende umfassen, um Schrauben einer Schraubverbindung, die von außen eingeschraubt werden sollen, zu verdecken. Hier ist eine montagefreundliche Ausführung an die Hand gegeben, da nach Entfernen der Sichtblende eine Schraubbarkeit von außen gewährleistet ist.

Das Verbindungselement kann aber auch aus einem Hohlprofil mit einer sich über seine Länge erstreckenden Formausnehmung und einem mit diesem Hohlprofil verbindbaren Ansatz mit entsprechendem Formansatz zur formschlüssigen Verbindung der beiden Teile bestehen.

Weitere Einzelheiten und Vorteile der Erfindung werden anhand einer Vielzahl von Ausführungsformen zeigenden Zeichnungen näher erläutert. Es zeigen:
- Fig. 1-3:: Perspektivische Darstellungen unterschiedlicher Ausgestaltungen des Grundgerüsts gemäß einer Ausführungsform der vorliegenden Erfindung,
- Fig. 4-7:: unterschiedliche Grundmodule in perspektivischer Darstellung,
- Fig. 8-35:: unterschiedliche Ausführungsformen von Verbindungselementen des erfindungsgemäßen Möbelsystems,
- Fig. 36-39:: Schnittdarstellungen bzw. eine Draufsicht von verschiedenen Ausführungsformen von Montageplatten des erfindungsgemäßen Möbelsystems,
- Fig. 40-44:: perspektivische Darstellungen unterschiedlich ausgeformter Montageplatten, teilweise mit Anbauelementen gemäß verschiedenener Ausführungsformen des erfindungsgemäßen Möbelsystems und
- Fig. 45-49:: Schnittdarstellungen prinzipiell anders gestalteter Ausführungsvarianten des Verbindungselementes.

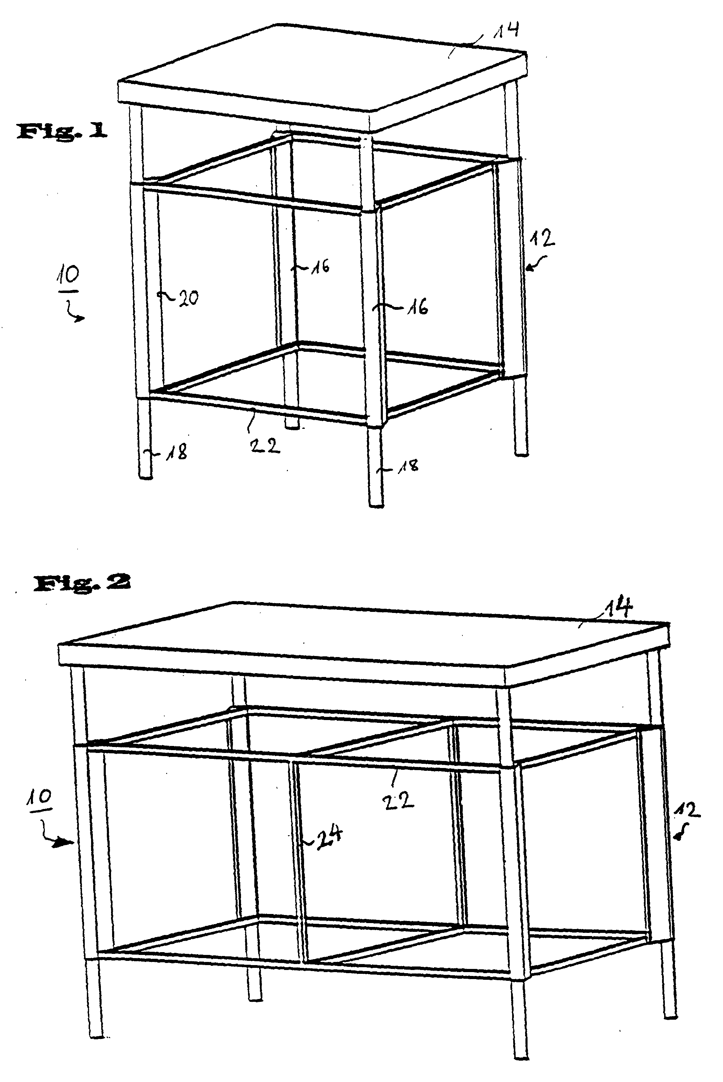

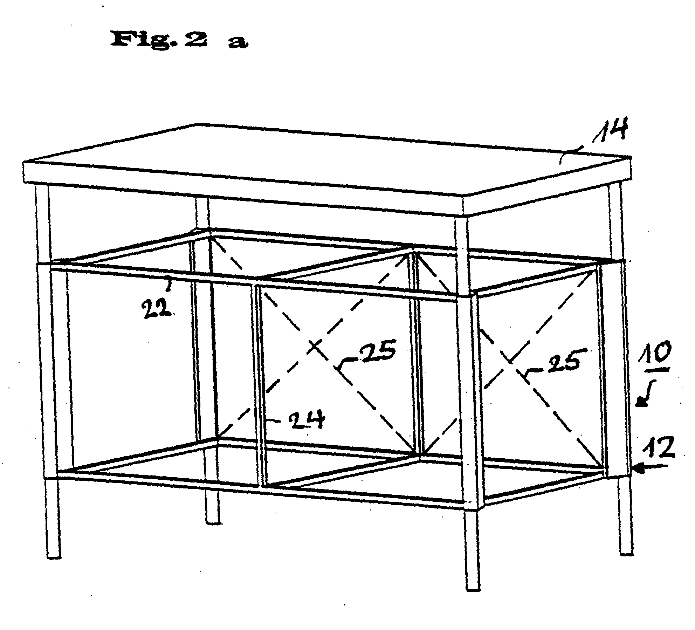

In den Fig. 1 bis 3 ist anhand unterschiedlicher Beispiele der Aufbau eines Grundgerüstes 12 für ein Küchenmöbel 10 dargestellt. In den Fig. 1 und 2 ist auf dem Grundgerüst 12 noch eine Arbeitsplatte 14 aufgelegt. Das Grundgerüst 12 besteht in sämtlichen Ausführungsformen aus Verbindungselementen 16, die vertikal ausgerichtet sind und in die jeweils ebenfalls vertikale Rohre 18 eingesteckt sind. Die Verbindungselemente 16 bestehen aus einem Formteil, das selbst als Rohr ausgebildet ist und an welchem ein seitlich abstehender Ansatz 20, der sich über die gesamte Länge des Verbindungselementes 16 erstreckt, ausgebildet ist. An diesem Ansatz 20 sind die horizontalen Streben, die hier als Vierkantrohre 22 ausgebildet sind, befestigt. Das Grundgerüst des erfindungsgemäßen Möbelsystems ist also durch ein Rohrsystem, welches durch Verbindungselemente 16 miteinander verbunden ist, ausgeführt. Die Verbindungselemente 16 und auch die üblichen Rohre 18, 22 bestehen bevorzugt aus Metall, beispielsweise Aluminium und Edelstahl, aber auch aus Holz oder Kunststoff. Das Grundgerüst, wie es in den Fig. 1 bis 3 dargestellt ist, weist jeweils vier Füße auf, wobei hier jeweils auch Rollen an den Füßen vorgesehen werden können. Es werden durch die horizontal verlaufenden Rohre 22 zwei Bodenebenen gebildet. Statt der Rohre 18, 20 kann in hier nicht dargestellter Art und Weise auch beispielsweise eine Platte aus Metall oder Holz mit den Verbindungselementen verbunden sein.

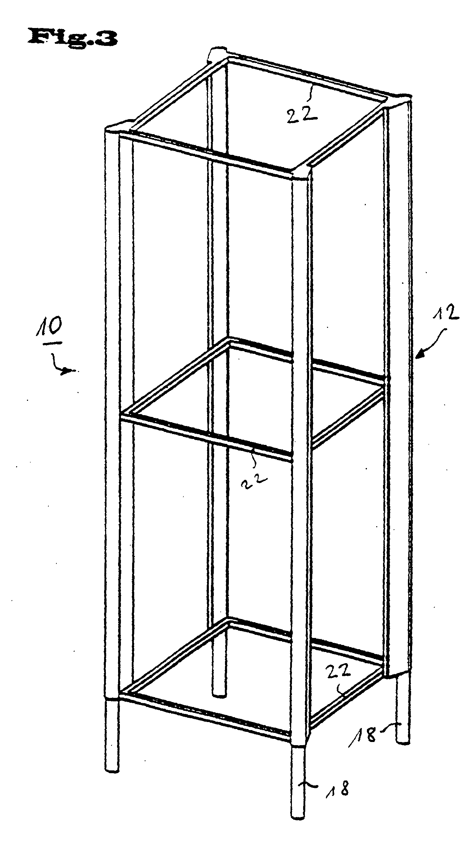

Während die Fig. 1 einen Monoblock zeigt, in dem später ein Funktionselement, wie beispielsweise ein Gerät ausgebildet wird, ist das Ausführungsbeispiel gemäß Fig. 2 als Duoblock ausgebildet. Hier können später zwei Geräte nebeneinander untergebracht werden. Die horizontalen Vierkantrohre 22 sind hier durch einen mittleren vertikalen Tragrahmen 24, der ebenfalls aus Vierkantrohren besteht, miteinander verbunden. Wie in Fig. 2a dargestellt, kann der Rahmen im Rückwandbereich zur Vermeidung von Durchbiegung und dergleichen mit statischen Hilfsmitteln, wie Seilen oder Stäben 25, versteift werden. Die Ausführungsform gemäß Fig. 3 zeigt einen hohen Monoblock, in dem zwei Funktionsfächer übereinander angeordnet sind. Hier ist neben den unteren und oberen Auflageebenen, die durch die horizontal verlaufenden Vierkantrohre 22 gebildet sind, noch eine mittlere Auflageebene durch entsprechende Vierkantrohre 22 ausgebildet, wobei diese in ihrer Höhe an den Verbindungselementen 16 frei justierbar befestigbar sind.

Bei den hier dargestellten Grundgerüsten 12 sind die Rohre 18, die hier als Rohre mit kreisförmigem Querschnitt ausgebildet sind, nur soweit in das jeweilige Verbindungselement 16 eingeführt, wie das für die notwendige Stabilität durch entsprechende Verbindungen bzw. konstruktive Sicherungen gewährleistet ist. Wesentlich ist es, daß das Gestell selbsttragend und selbstversteifend ist und daß über die üblichen hier eingesetzten Seitenteile für das Küchenmöbel keine Stabilität erreicht wird. Hierdurch braucht auf die Ausgestaltung der Seitenelemente keinerlei Rücksicht genommen werden. Es können also beliebige Funktionalitäten in dem selbsttragenden und selbstversteifenden Grundgerüst 12 untergebracht sein.

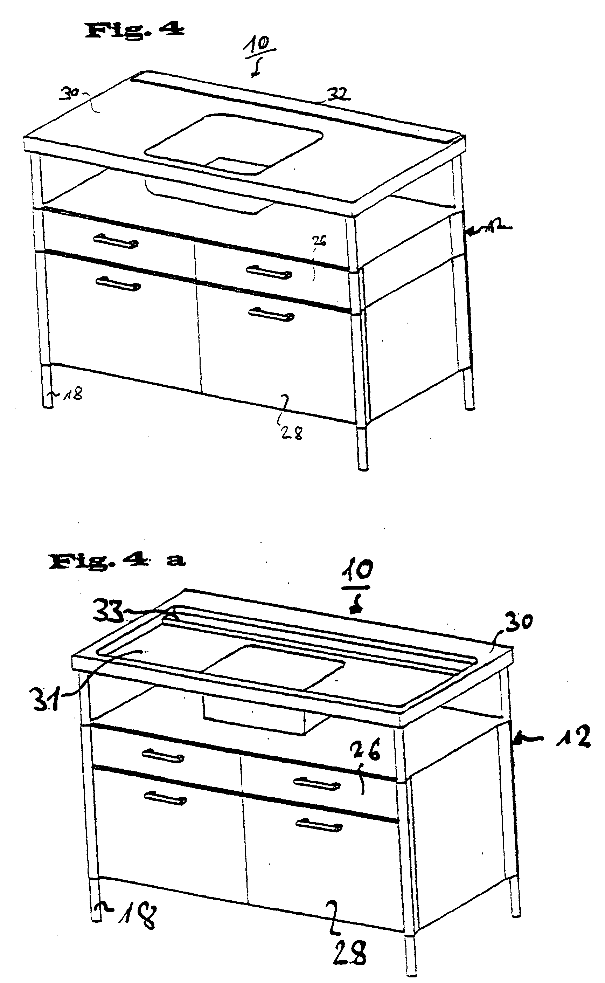

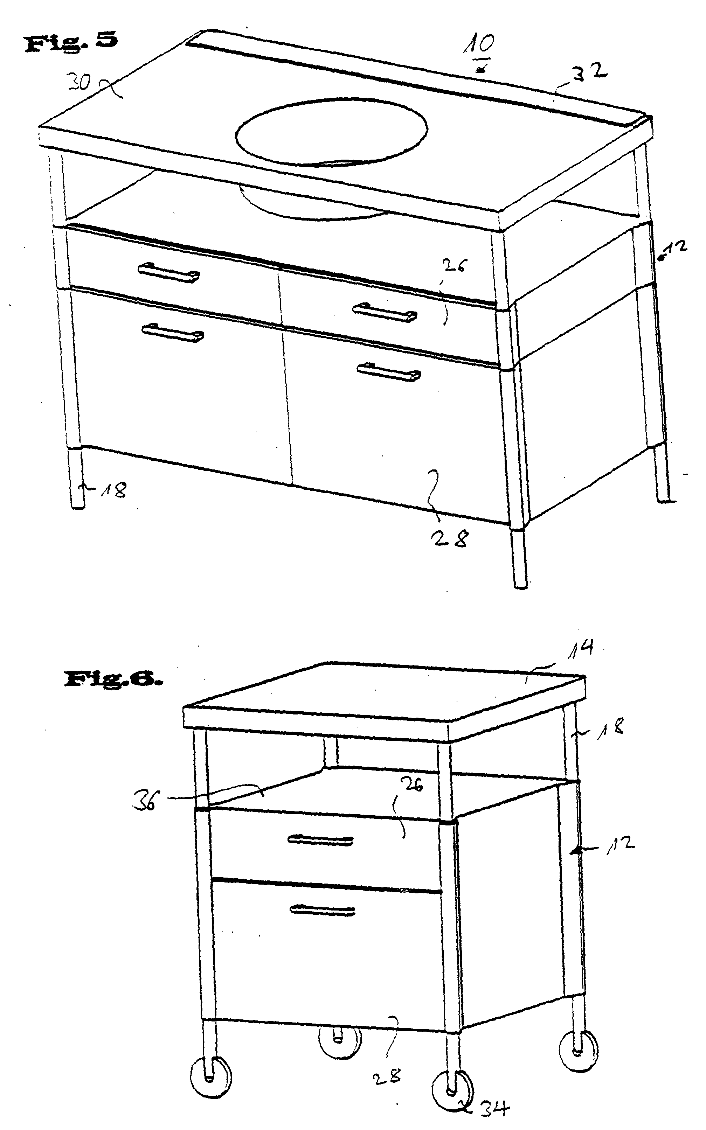

Die Fig. 4 bis 7 geben hier einige Beispiele für entsprechend verwirklichte Funktionalitäten wieder. Dabei ist in dem Küchenmöbel gemäß den Fig. 4 und 5 jeweils ein Duoblock dargestellt, der im wesentlichen ein Grundgerüst 12 gemäß der vorherigen Ausführungsform nach Fig. 2 enthält. Hier ist jedoch jeweils noch eine zusätzliche horizontale Ebene eingezogen um Schubfächer 26 unterzubringen. Im unteren Bereich sind größere Schubfächer 28 angeordnet. Als Auflageplatte 14 ist jeweils eine Naßeinheit 30 mit integriertem Becken aufgesetzt, wobei sich die Form der Becken in den Ausführungsformen gemäß der Fig. 4 und 5 unterscheidet. Im rückwärtigen Bereich der Naßeinheit 30 sind jeweils Leisten 32 aufgelegt, die auf der Naßeinheit 30 eine Anschlagkante bilden und somit verhindern, daß Gegenstände oder Flüssigkeiten hinter die Naßeinheit laufen. In Fig. 4a ist eine Naßeinheit 30 dargestellt, in der das integrierte Becken in einer großflächigen Mulde 31 angeordnet ist, die im hinteren Bereich einen treppenförmigen Absatz 33 aufweist.

In Fig. 6 ist ein Beispiel für eine Zubereitungseinheit dargestellt, bei der in dem Gestell 12 ein Schubfach 28 und ein schmaleres Schubfach 26 ausgebildet ist. Oberhalb des schmaleren Schubfachs 26 ist eine Parkebene 36 gebildet. Auf dem Grundgerüst 12 lagert eine Arbeitsplatte 14 auf. Die Zubereitungseinheit ist hier auf Rollen 34 verfahrbar abgestützt.

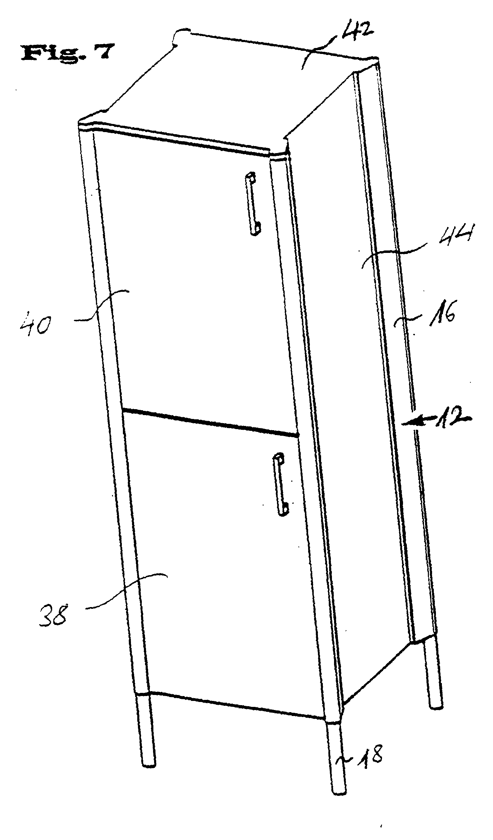

In Fig. 7 ist im Grundgerüst 12 ein "hoher" Monoblock mit zwei in diesem Ausführungsbeispiel übereinander angeordneten Geräten ausgebildet, der zwei übereinander angeordnete Türelemente 38 und 40 aufweist. Im oberen Bereich ist durch das Türelement 40 im hier dargestellten Ausführungsbeispiel ein Kühlschrank integriert. Obenauf liegt eine Deckplatte 42 und seitlich sind Seitenwände 44 mit den Verbindungselementen 16 verbunden.

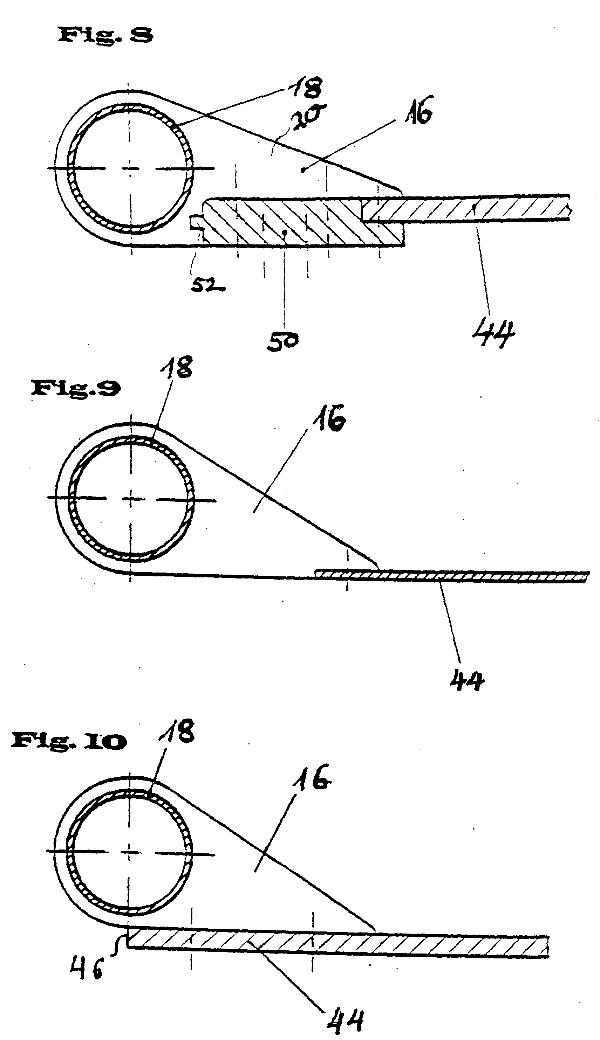

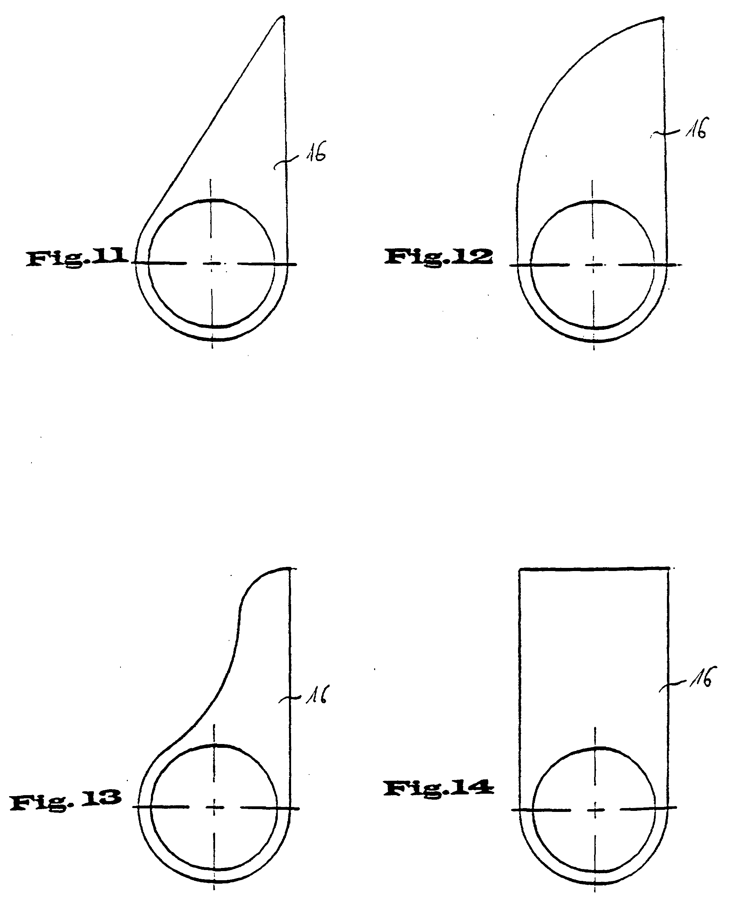

In Fig. 8 ist ein Verbindungselement 16 im Schnitt dargestellt. Es besteht aus einem rohrförmigen Hohlprofil und einem fahnenartigen Ansatz 20, wobei die Gesamtform des Querschnitts einer asymmetrischen Tropfenform entspricht, wie sie auch in Fig. 11 wiedergegeben ist. In der hier dargestellten Ausführungsform ist das Verbindungselement beispielsweise als Aluminiumprofil gefertigt. Es kann auch aus anderen Materialien, wie Eisen, Kunststoff etc. bestehen. In der hier dargestellten Schnittebene ist im Inneren des Verbindungselements 16 ein Rohr 18 dargestellt, das mit dem Verbindungselement 16 drehfest verbunden ist. In der hier dargestellten Ausführungsform des Verbindungselementes 20 ist eine Ausnehmung auf der Seite des Verbindungselementes vorgesehen, die zur Möbelinnenseite gerichtet ist. In dieser Ausnehmung ist eine Montageplatte 50 eingeschraubt, die zusätzlich über einen nasenförmigen Ansatz 52 in einer entsprechenden Nut des Verbindungselementes eingefügt ist. Die Montageplatte weist je nach Anforderungen Lochbohrungen, Schraubbohrungen und eine weitere Nut zur Aufnahme einer Seitenwand 44, die entsprechend eingeschraubt werden kann, auf. Der genauere Aufbau und die Funktion der Montageplatte 50 wird weiter unten genauer beschrieben. In der Ausführungsform gemäß Fig. 8 ist eine Seitenwand 44 zwischen der Ausnehmung der Montageplatte 50 und dem Ansatz 20 eingesetzt und mit einer hier nicht näher dargestellten Schraubverbindung verbunden.

In der Ausführungsform gemäß Fig. 9 ist eine alternative Ausführungsform des Verbindungselementes dargestellt, in der nur eine vergleichsweise kleinere Ausnehmung zur unmittelbaren Aufnahme eines Seitenelementes 44 vorhanden ist. In dieser Ausführungsform ist auf die Montageplatte verzichtet.

Eine weitere alternative Ausgestaltung des Verbindungselementes zeigt die Fig. 10. Hier weist das Verbindungselement 16 jedoch keine Ausnehmung auf, so daß das Seitenelement 44 außen auf das Verbindungselement 16 aufgeschraubt wird. Hierdurch entsteht ein Absatz 46. Im Unterschied zu den Ausführungsformen gemäß der Fig. 8 und 9 ist das Seitenelement 44 also nicht bündig mit dem Verbindungselement 16 ausgebildet. Der Absatz 46 dient gleichzeitig als Türanschlag für eine Tür.

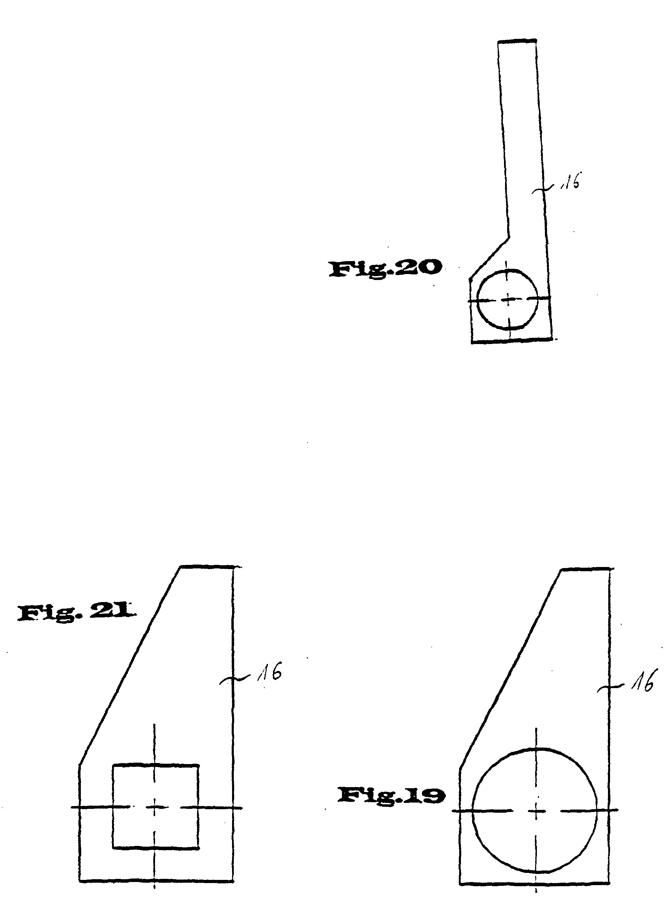

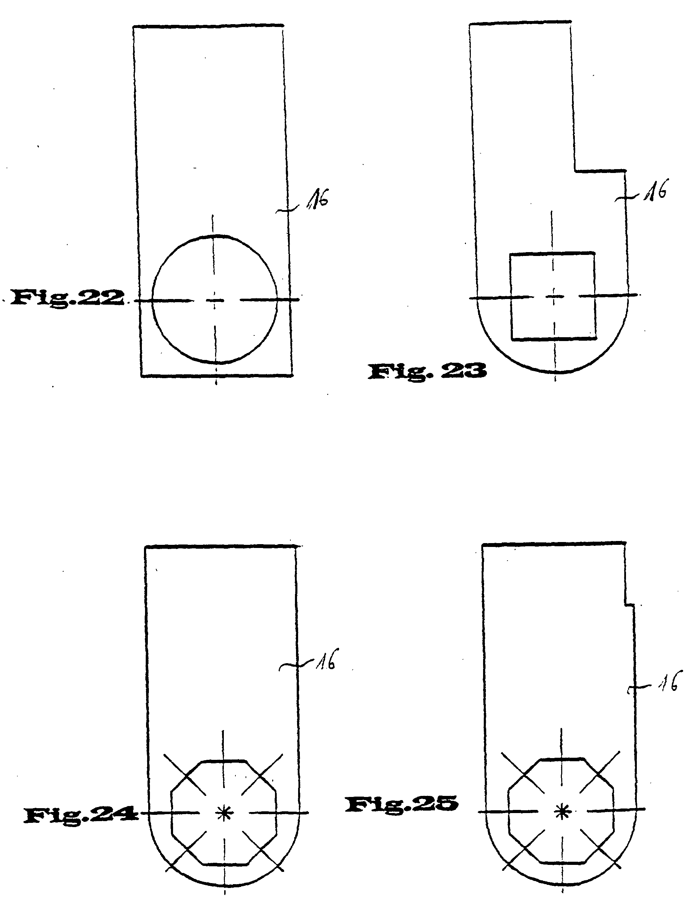

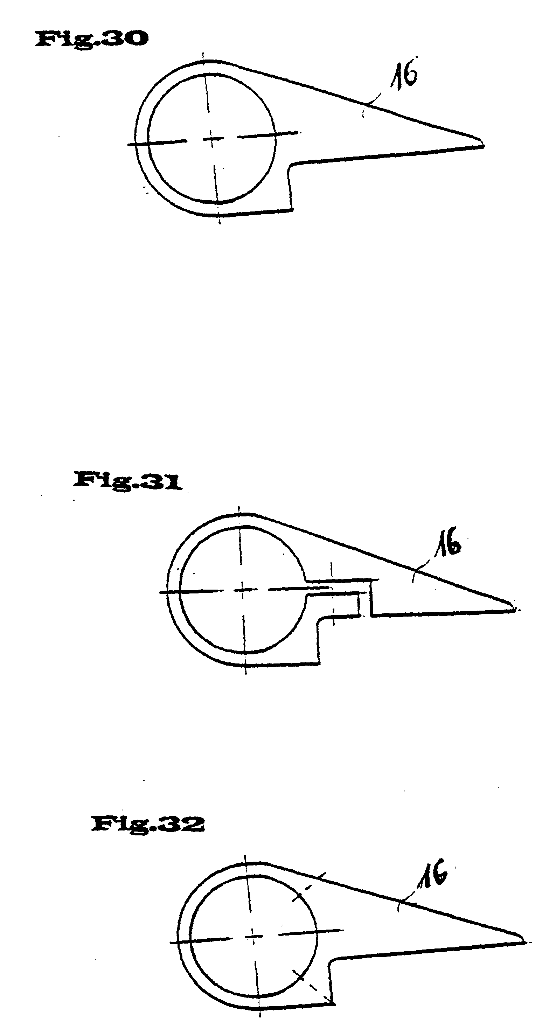

In den Ausführungsformen gemäß der Fig. 1 bis 10 und in den weiteren Ausführungsformen ab Fig. 31 wird von Verbindungselementen 16 mit im Querschnitt asymmetrischer Tropfenform ausgegangen, wie diese in Fig. 11 dargestellt ist. Die Fig. 12 bis 25 zeigen aber Formvarianten der Verbindungselemente, denen jeweils gleich ist, daß sie aus einem Rohr und/oder weitgehend geschlossenem Hohlprofil und einem Ansatz bestehen. Die Formgebung ist aber grundsätzlich verschieden. So kann das Hohlprofil, wie in den Fig. 11 bis 17, 19, 20 und 22 eine innen im Querschnitt kreisförmige Kontur aufweisen. Diese Innenkontur kann aber auch mehreckig sein. In den Fig. 21 und 23 ist jeweils eine viereckige Innenkontur gezeigt, während in den Fig. 24 und 25 eine achteckige Innenkontur gezeigt ist. Bei den mehreckigen Innenkonturen sind die hier nicht näher dargestellten Rohre 18 des Grundgerüsts 12 selbstverständlich formangepaßt ebenfalls mehreckig ausgeführt. Gerade die Ausbildung von Vielecken vereinfacht es, einen bestimmten Winkel für die nächste angeschlossene Seite zu justieren und zu fixieren. In den in den Fig. 11 bis 25 dargestellten Rohrgeometrien sind nur teilweise Ausnehmungen dargestellt, in die entweder unmittelbar eine Seitenwand 44 oder eine Montageplatte 50 aufnehmbar sind. Die Anordnung und Ausgestaltung dieser Ausnehmungen ist aber nicht auf die hier dargestellten Ausführungsformen beschränkt, sondern kann auch auf die übrigen Ausführungsformen angewandt werden.

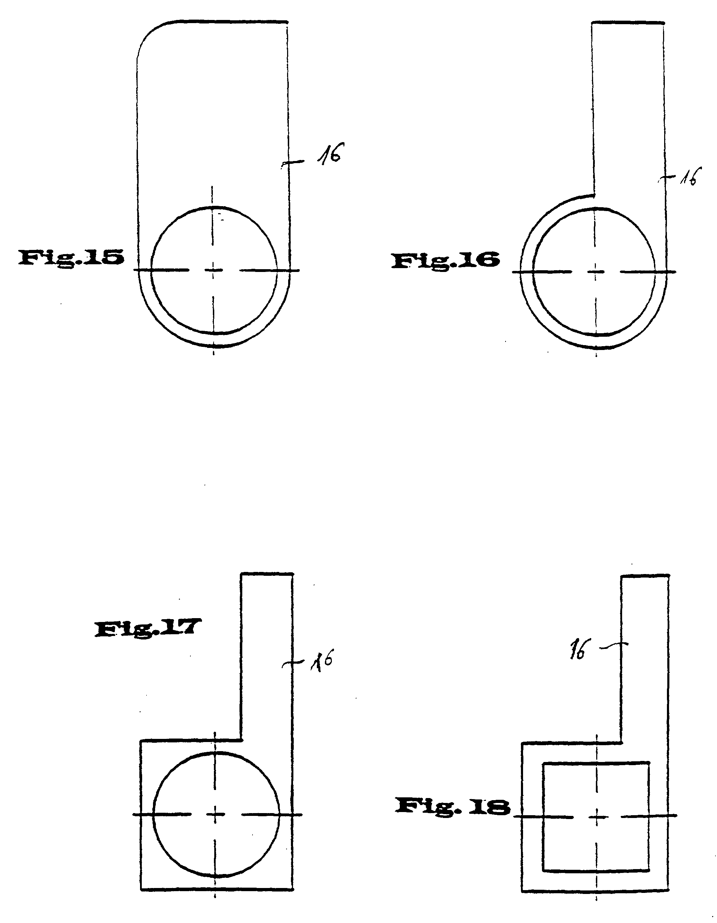

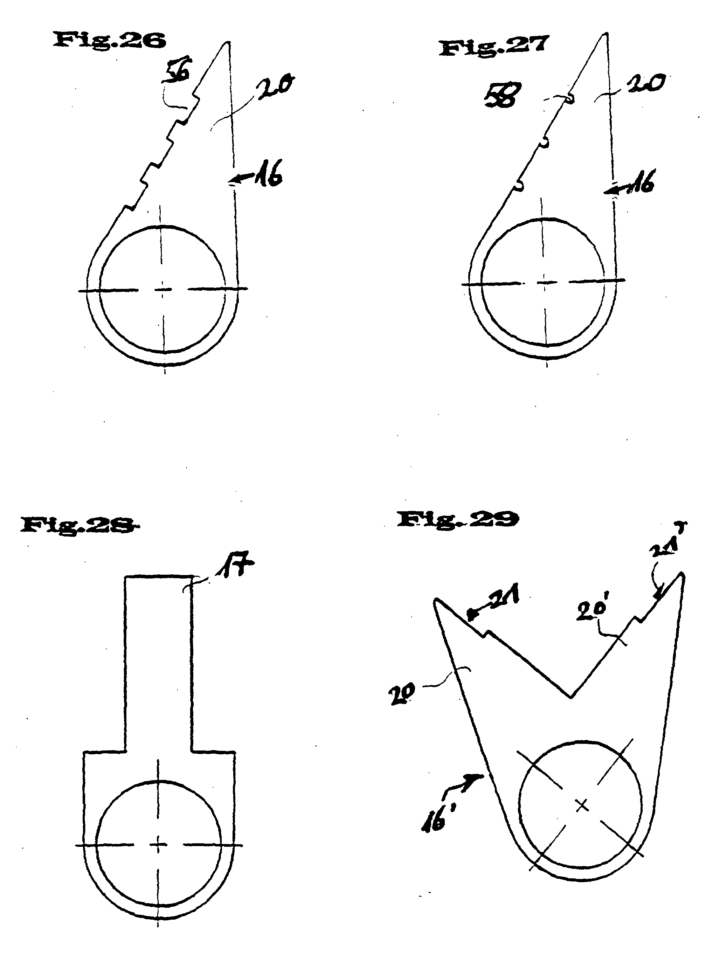

In den Fig. 26 und 27 sind jeweils Verbindungselemente 16 dargestellt, die von ihrer Grundform her demjenigen gemäß Fig. 11 entsprechen, jedoch auf der vom Möbel weg weisenden nach außen liegenden Fläche des Ansatzes 20 Verzierungsriefen 56 (in Fig. 26) bzw. 58 (in Fig. 27) vorgesehen sind. Hierdurch wird die Profilsichtseite entsprechend attraktiver gestaltet. In Fig. 28 ist ein Profil 17 dargestellt, das von der Form des Profils 16 gemäß Fig. 14 durch Vorsehen von zwei Ausnehmungen abgeleitet ist. Dieses Verbindungselement 17 bildet ein Mittelteil, mit dem beispielsweise ein mittlerer Pfosten eines Küchenmöbels bzw. Grundmoduls zu realisieren ist. Über das Verbindungselement 17 können auch weitere Elemente (wie beispielsweise Grundmodule) angebaut werden. In den entsprechenden Ausnehmungen können jeweils beispielsweise hier nicht näher dargestellte Montageplatten 50 eingesetzt werden, über die dann horizontale Rohrverbindungen, Wandteile etc. ansetzbar sind.

In Fig. 29 ist ein Verbindungselement 16' dargestellt, bei dem zwei im rechten Winkel zueinander stehende Ansätze 20 und 20' angeformt sind. Dieses Verbindungselement kann als Eckverbindung im hinteren Grundgerüstbereich dienen. In entsprechende Ausnehmungen 21 bzw. 21' können beispielsweise eine Rückwand und eine Seitenwand montiert werden.

Anhand der Fig. 30 bis 34 zeigen unterschiedliche Ausführungsformen von Verbindungselementen 16, die sich in der Art der Befestigung des hier nicht näher dargestellten Rohres unterscheiden. In dem Ausführungsbeispiel gemäß Fig. 30 wird das Rohr 18 durch eine Passung, durch Kleben oder eine sonstige lösbare bzw. unlösbare Verbindung mit dem Verbindungselement 16 verbunden. In Fig. 31 ist ein Verbindungselement dargestellt, mit dem das Hohlprofil des Verbindungselements als Rohrschelle ausgebildet ist, so daß hier über eine entsprechende Klemmverschraubung eine Klemmung des Rohres oder Radhalter 18 erfolgt.

In Fig. 32 sind mit strichlierten Linien in dem Verbindungselement 16 zwei Klemmschrauben angedeutet, über die ein entsprechend eingesetztes Rohr 18 ebenfalls verklemmbar ist.

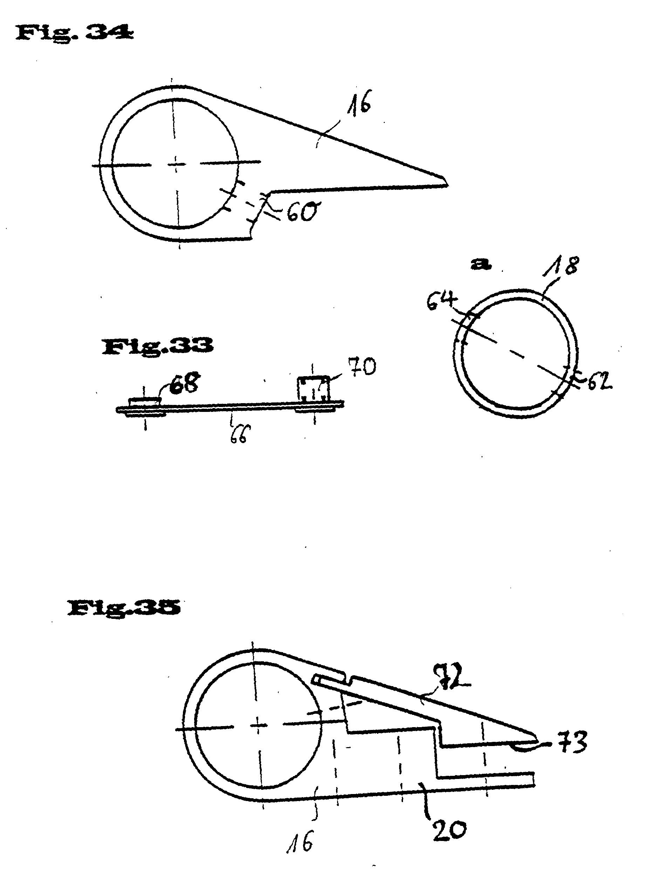

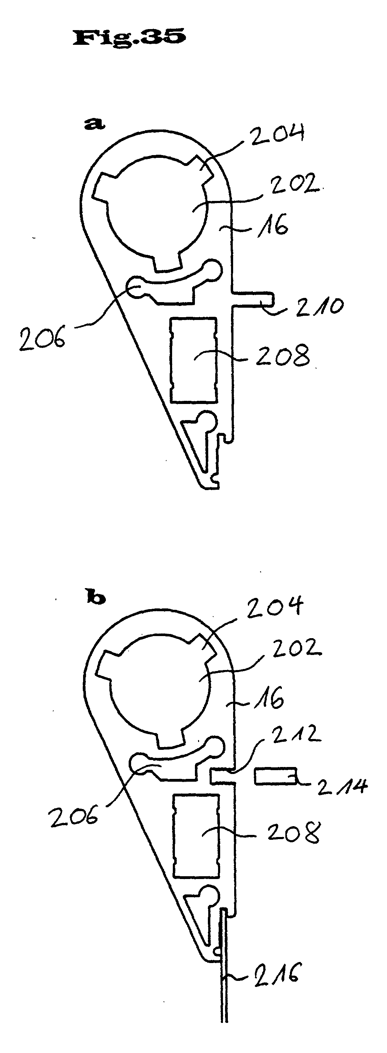

In den Fig. 33 und 34 ist eine alternative Befestigung des Rohres 18, das hier nicht näher dargestellt ist, im Verbindungselement 16 dargestellt. Hier ist im Verbindungselement 16 eine entsprechende Durchbrechung 60 vorgesehen. Auch das festzulegende Rohr 18, das in der Fig. 33a dargestellt ist, weist an zwei Stellen, die diametral gegenüberliegen, Durchbrechungen 62 und 64 auf. Durch die Durchbrechungen 60 des Verbindungselements 16 und die Durchbrechungen 62 und 64 des Rohres 18 ist eine Blattfeder 66, die in Fig. 33 dargestellt ist, zur Festlegung des Rohres 18 schiebbar. Zur Festlegung der Blattfeder sind verschieden hohe Vorsprünge 68 und 70, die beispielsweise aus angeschweißten Mutterköpfen bestehen, vorgesehen, wobei der Vorsprung 68 weniger hoch ist als der Vorsprung 70. Der Vorsprung 68 kann durch die vergleichsweise höhere Durchbrechung 62 des Rohres 18 geschoben werden. Der Vorsprung 70 paßt in die Ausnehmung 60 des Verbindungselementes 16. Die Länge der Blattfeder 66 ist nun so bemessen, daß sie sich mit ihrer der Verdickung 68 vorgelagerten Zunge in montierter Stellung innerhalb der Ausnehmung 64 des Rohres 18 zu liegen kommt, während die Verdickung 70 in der Ausnehmung 60 des Verbindungselements 16 zu liegen kommt. Hierdurch ist das Rohr axial und radial im Verbindungselement 16 gesichert. Die Verdickung 70 ist an die Durchbrechung 60 angepaßt, so daß hier ein Klemmset verwirklicht ist.

In Fig. 35 ist eine weitere alternative Ausgestaltung des Verbindungselementes 16 gezeigt. Das Verbindungselement 16 weist hier Schraublöcher auf, die eine Verschraubung von der Außenseite des Möbels zulassen. Nach der Verschraubung von außen kann eine Sichtblende 72 über dem Bereich der Schraubverbindungen gesteckt und durch eine Federnutverbindung oder eine Schnapp-Klick-Verbindung festgelegt werden. Der Ansatz 20 des Verbindungselements 16 hat eine Ausnehmung, in der eine hier nicht näher dargestellte Seitenwand aufgenommen werden kann. Diese wird durch eine entsprechende Anlagefläche 73 aufgestützt und entsprechend der strichlierten Linie verschraubt. Durch unterschiedliche Ausbildung der Sichtblende 72 und die Anlagefläche 73 können hier durch Austausch der Sichtblende 72 unterschiedliche Stärken der Seitenwand ausgeglichen werden.

In Fig. 35a und Fig. 35b sind weitere Ausführungsbeispiele des Verbindungselementes 16 gezeigt. Diese beiden Verbindungselemente weisen jeweils Rohraufnahmen 202 auf. Gleich verteilt über den Umfang sind an diesen Rohraufnahmen jeweils drei Nuten 204 ausgenommen. Beide Verbindungselemente 16 weisen auch eine entsprechende Bohrung 206 auf, die zur Befestigung von Abdeckkappen, die hier nicht näher dargestellt sind, dient.

Zusätzlich umfassen beide Ausführungsformen der Verbindungselemente 16 Hohlkammern 208 zur Aufnahme von Eckverbindern (vgl. Ausführungsform gemäß Fig. 60a), die zur Befestigung von Böden dienen. In der Ausführungsform gemäß Fig. 35a ist an dem Verbindungselement 16 einstückig ein Vorsprung 210 angeformt, der zur Rückwandbefestigung dient.

In der Ausführungsform gemäß Fig. 35b des Verbindungselements 16 ist eine Nut 212 ausgenommen, in welche ein Frontanschlag 214 einsetzbar ist. In der Ausführungsform gemäß Fig. 35b ist in eine entsprechende Aufnahme ein Seitenblech 216 eingesetzt.

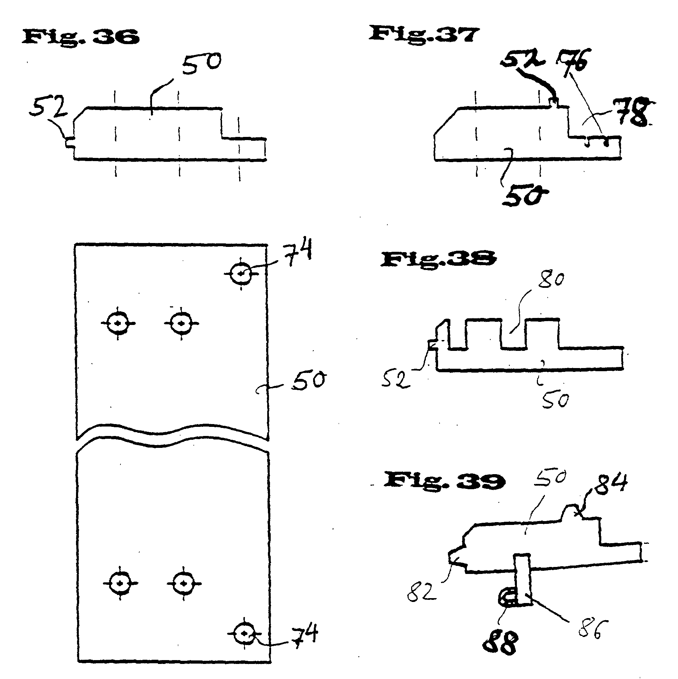

In den Fig. 36 bis 39 sind unterschiedliche Ausgestaltungen der Montageplatte 50 gezeigt. Die Fig. 36 zeigt dabei eine Querschnittdarstellung und eine Draufsicht der Montageplatte 50, während die Fig. 37 bis 39 jeweils nur Querschnittdarstellungen der Montageplatte zeigen. Die Montageplatte 50 gemäß Fig. 36 entspricht derjenigen aus Fig. 8. In der Draufsicht sind eine Reihe von vorgebohrten Löchern und Schraubbohrungen 74, die zur Aufnahme von Standardbeschlägen dienen, dargestellt. Seitlich ist ein Vorsprung 52 an der Montageplatte 50 vorgesehen, der zur Justierung und Verhinderung des Abhebens bei flächiger Belastung durch eine in Innenrichtung des Möbels eine Drucklast aufbringende Seitenwand oder eine nach außen gerichtete Zugkraft eines Scharniers, das in der Funktionsleiste angebracht ist, dient. Der Vorsprung 52 greift in eine entsprechende Ausnehmung im Verbindungselement 16 ein (vgl. Fig. 8). Insgesamt kann die Dimensionierung der Seitenverschraubung aufgrund dieses formschlüssigen Eingriffs des Vorsprungs 52 in die entsprechende Ausnehmung des Verbindungselements 16 kleiner gewählt werden.

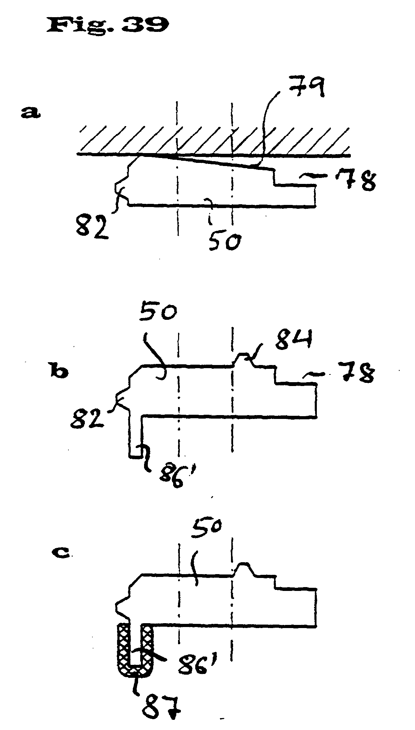

Bei der in Fig. 37 dargestellten Montageplatte 50 ist der Vorsprung 52 an einer anderen Stelle angeordnet. Zusätzlich sind hier Ausnehmungen 76 vorgesehen, in welche Gummilippen (hier nicht näher dargestellt) oder ähnliche Abstandhalter einsetzbar sind, um unterschiedliche Seitenwandstärken, und Toleranzen der Seitenwände von hier nicht näher dargestellten einzusetzenden Seitenwänden, die in der Ausnehmung 78 zu liegen kommen, auszugleichen. Grundsätzlich können aber durch unterschiedliche Ausnehmungen 78 auch unterschiedliche Seitenstärken realisiert werden. Eine weitere Ausführungsform der Montageplatte ist in Fig. 38 gezeigt, bei der Ausnehmungen in der Montageplatte, die hier mit 80 bezeichnet sind, vorgesehen sind, wobei diese Ausnehmungen zur Gewichtsersparnis dienen. Schließlich zeigt die Fig. 39 eine wiederum variierte Ausführungsform der Montageplatte 50, die zwei konische Führungen 82 und 84 und eine integrierte Anschlagleiste 86 mit Dichtung 88 aufweist. Die Dichtung 88 ist optional und kann gegebenenfalls auch weggelassen werden. In den Ausführungen gemäß der Fig. 39a, 39b und 39c sind Abwandlungen der Ausführungsform gemäß Fig. 39 dargestellt. In der Abwandlung gemäß Fig. 39a weist die Montageplatte eine schräge Anlagefläche 79 auf, die durch entsprechendes Anziehen der Montageschrauben eine Verengung des durch die Ausnehmung 78 gebildeten Zwischenraums und damit eine Anpassung an die Seitenwandstärke der hier nicht näher dargestellten Seitenwand ermöglichen.

Bei der Ausführungsform gemäß Fig. 39b ist die Anschlagleiste 86' fest an der Montageplatte 50 angeformt. In Fig. 39c wiederum ist die Anschlagleiste 86' mit einer U-förmigen Gummileiste 87 ummantelt.

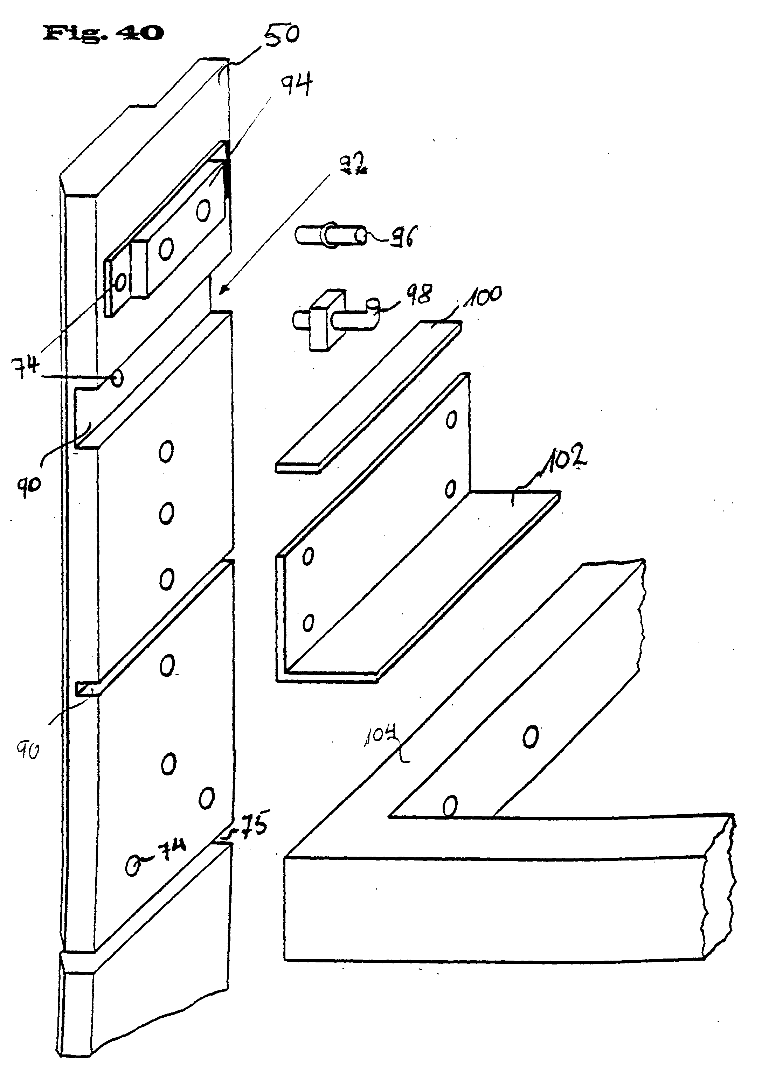

In Fig. 40 ist eine Montageplatte 50 mit einer Reihe unterschiedlicher Funktionsbeschlagteile dargestellt. Die Montageplatte 50 weist eine Reihe von Bohrungen 74 auf. Darüberhinaus sind Einschnitte bzw. Ausnehmungen 90, 92 vorhanden. Ein Scharnierböckchen 94, weist in montierter Stellung ebenfalls in der Fig. 40 dargestellt. Mit 96 und 98 sind verschiedene Fachbodenträger, wie sie bauüblich sind, dargestellt. Auch die Leiste 100 stellt einen Fachbodenträger dar, der in einer Ausnehmung 90 eingepaßt ist und dort eingeschoben werden kann. Mit 102 ist ein Auflagewinkel bezeichnet, der über Schrauben mit der Montageplatte verbindbar ist. Schließlich zeigt 104 einen Rahmen für einen Boden, der ebenfalls über Schraubverbindungen mit der Montageplatte verbindbar ist. Die Montageplatte bietet eine Vielzahl von variablen Anbaumöglichkeiten für die einzelnen Beschlagteile, Bauteile und Funktionsteile. Die Montageplatte 50 kann durchbrochen sein, wie hier mit dem Durchbruch 75 bezeichnet, um hier beispielsweise auch einen Rahmen 104 aufzunehmen. Die Unterbrechung 75 kann auch länger ausgebildet sein, was zur Materialeinsparung und damit zu einer Reduzierung der Kosten und des Gewichts führt.

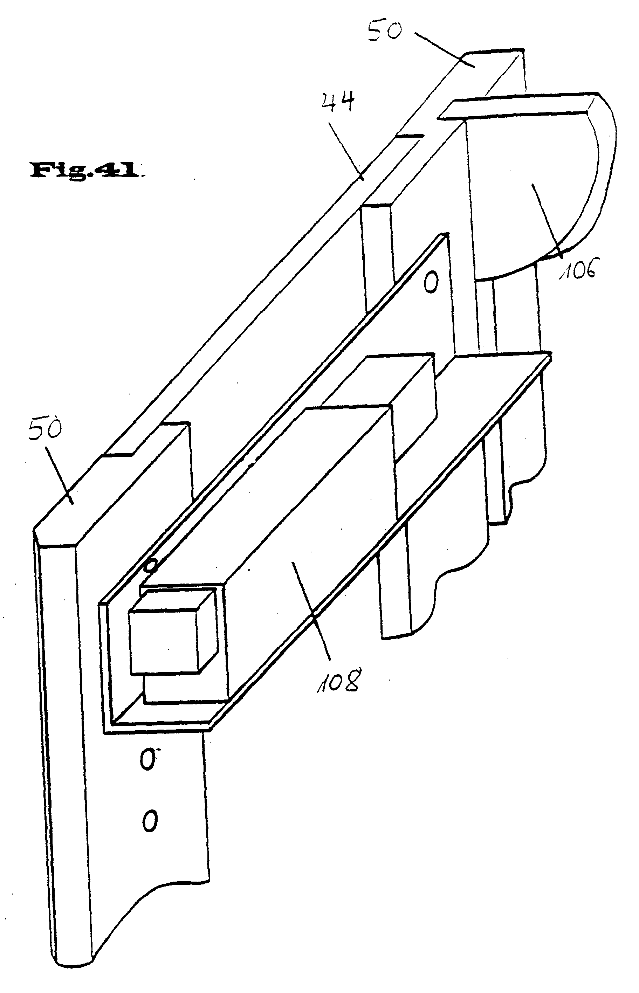

In Fig. 41 ist eine andere typische Einbausituation von zwei Montageplatten 50 in dem hier nicht näher dargestellten Grundgerüst perspektivisch dargestellt. Zwischen den beiden Montageplatten 50 ist ein Seitenelement 44 gehalten. Zusätzlich ist in der hinteren Montageplatte 50 in einer entsprechenden Nut eine hier nur geschnitten dargestellte Rückwand 106 eingesetzt. Seitlich nach innen ist in entsprechend in den Montageplatten 50 vorgesehene Schraubbohrungen eine übliche Schubführung 108 angeschraubt.

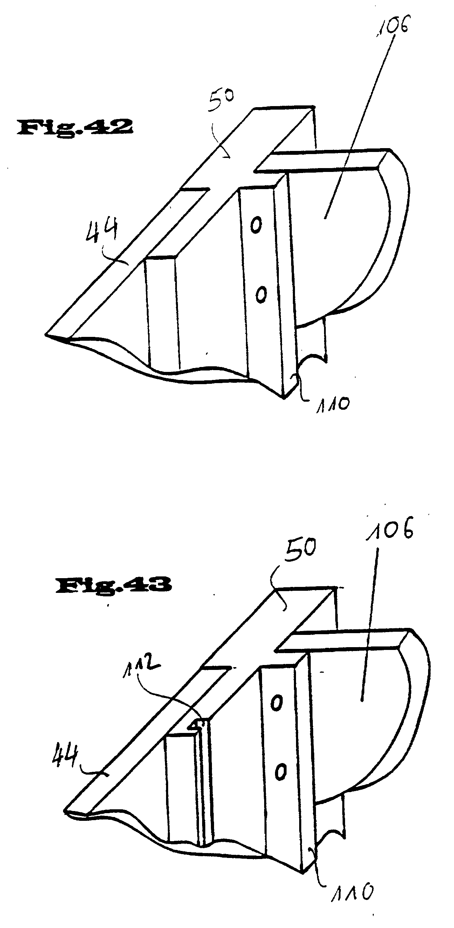

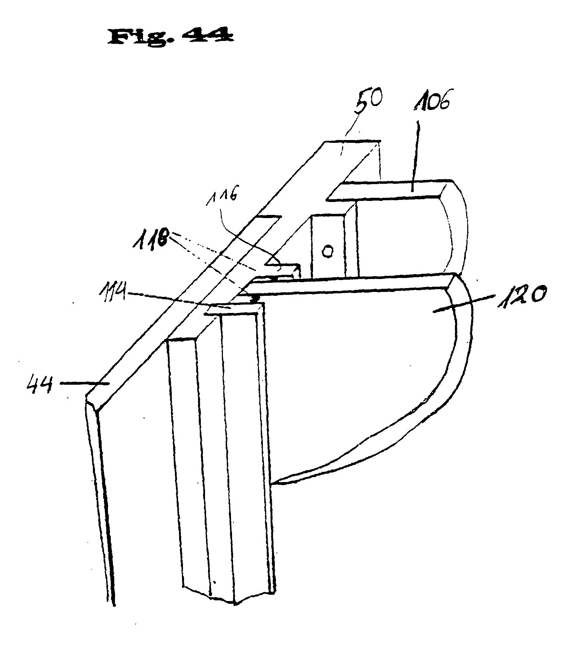

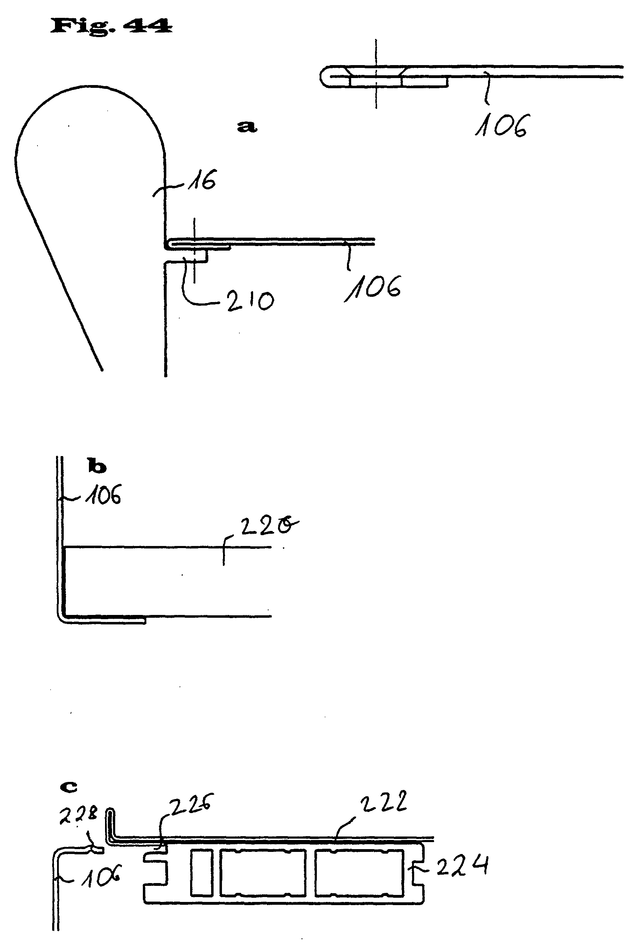

In der Fig. 42 ist eine alternative Ausführungsform der rückwärtigen Montageplatte 50 dargestellt, die eine integrierte Anschlagleiste 110 aufweist, an die die Rückwand 106 anschraubbar ist. In der Ausführungsform gemäß Fig. 43 ist eine Montageplatte 50 dargestellt, die ebenfalls eine Anschlagleiste 110 zum Anschrauben der Rückwand 106 aufweist und zusätzlich eine Nut 112, in die eine weitere Zwischenwand einsetzbar ist. Durch die hier nicht näher dargestellte weitere einsetzbare Zwischenwand und die Rückwand 106 ist somit ein abgetrenntes Fach im Küchenmöbel gebildet. Fig. 44 weist eine hintere Montageplatte 50 auf, die im wesentlichen derjenigen gemäß Fig. 43 entspricht. Hier ist allerdings in der Ausnehmung 112 eine abnehmbare Klemmleiste 114 eingesetzt, die mit einer an der Montageplatte zusätzlich angeformten Anschlagleiste 116 und zwei Gummidichtungen 118 zusammenwirkt, um eine vom Inneren des Küchenmöbels aus abnehmbare weitere Rückwand 120 zu halten.

In der Ausführungsform gemäß Fig. 44a ist eine Befestigung einer Rückwand 106 ohne das Vorsehen einer zusätzlichen Montageplatte gezeigt. Hier ist ein Verbindungselement 16 entsprechend einer Ausführungsform der Fig. 35a mit einem einstückig angeformten Ansatz 210 ausgestattet, an den die entsprechende Rückwand 106 anschraubbar ist.

In der Ausführungsform gemäß Fig. 44b ist eine Rückwand 106 an einen unteren Boden 220 geschraubt, so daß sie senkrecht nach oben absteht. In der Ausführungsform gemäß Fig. 44c ist ein oberer Boden 222 mit einem darunter angeordneten Bauelement 224 angeordnet, in welchem eine Nut 226 ausgenommen ist. In dieser Nut 226 wird ein umgebogener Teil einer Rückwand 106, an dem ein oder mehrere Noppen 228 vorgesehen sind, eingeschoben. Dies stellt eine weitere Möglichkeit der Rückwandbefestigung dar. Zu einer stabilen Befestigung einer Rückwand 106 werden die in den Fig. 44a, 44b, und 44c wiedergegebenen Befestigungsmöglichkeiten miteinander kombiniert.

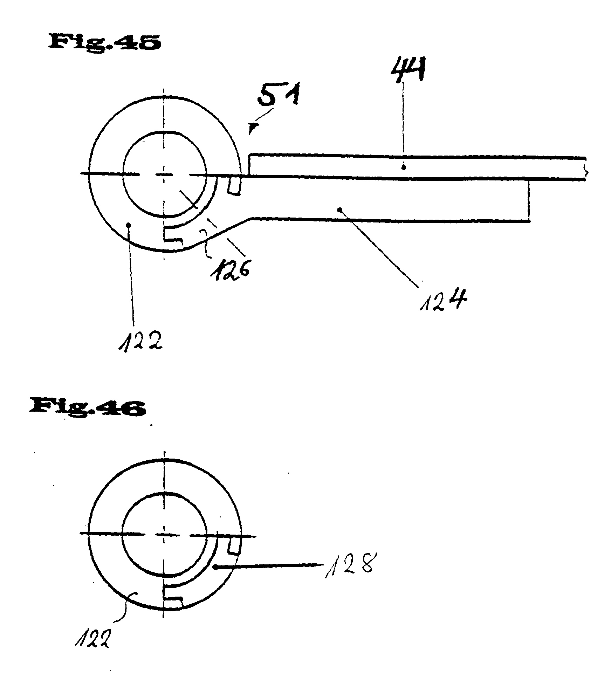

In den Fig. 45 bis 49 ist eine andere Konstruktionsweise eines Verbindungselements 51 dargestellt. Das Verbindungselement 51 ist hier zweiteilig aufgebaut und besteht aus einem Hohlprofil 122 und einem Ansatz 124. Im Hohlprofil ist eine Formausnehmung vorgesehen, in die ein entsprechender Formansatz 126 des Ansatzes 124 einschiebbar und über eine hier strichliert dargestellte Schraubverbindung festlegbar ist. An dem Ansatz 124 kann, wie bereits zuvor ausführlich dargelegt, eine Montageplatte oder aber unmittelbar ein Seitenteil 44 befestigt sein. Gemäß einer weiteren Ausführungsform kann der Ansatz 124 aber auch selbst als Montageplatte ausgebildet sein.

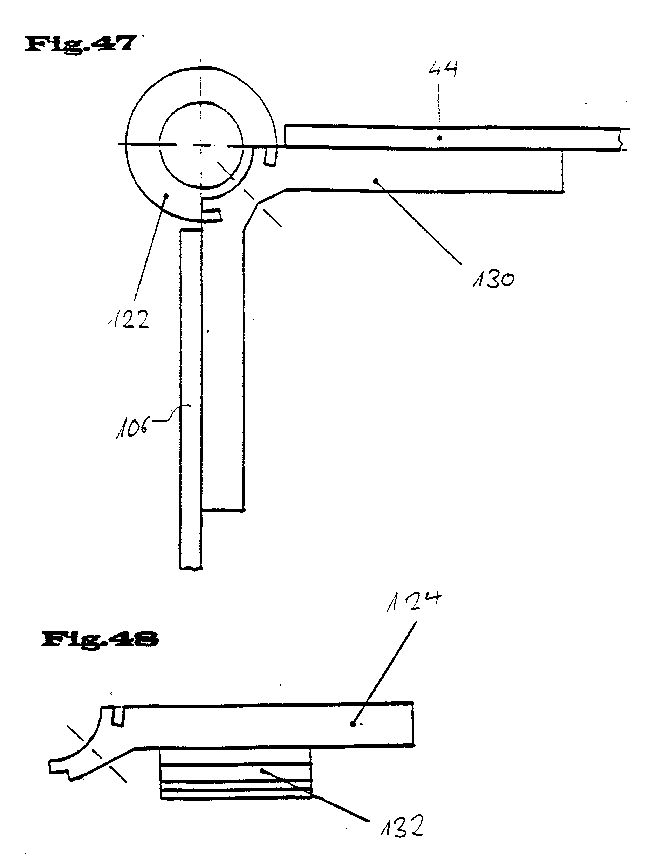

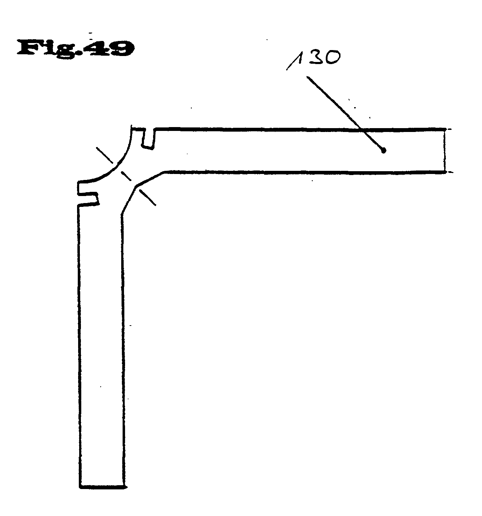

In Fig. 46 ist das Hohlprofil 122 mit der Formausnehmung dargestellt, in welche eine entsprechend formangepaßte Abdeckung 128 eingepaßt ist. In Fig. 47 ist in das Hohlprofil 122 ein rechtwinklig zueinander ausgerichteter Doppelansatz für eine Eckverbindung 130 eingesetzt. An diesen sind ebenfalls Seitenwände 44 bzw. eine Rückwand 106 befestigt. In Fig. 48 ist ein Ansatz 124 dargestellt, der hier als Montageplatte ausgebildet ist, wobei in dieser Darstellung ein Scharnierböckchen 132 oder alle übrigen Funktionsteile angeschraubt ist, auf dem ein bauübliches Scharnier zur drehbaren Lagerung eines Türelementes aufschiebbar ist.

In Fig. 49 ist nochmals das Ansatzteil 130 mit den beiden zueinander rechtwinklig stehenden Ansätzen gezeigt. Bezüglich der Verwendung und Möglichkeit der Abänderung der Verbindungselemente gemäß der Fig. 45 bis 49 kann auf die vorherigen Ausführungen zum Verbindungselement 51 bzw. 16 verwiesen werden.

## Patentansprüche

1. Möbelsystem, insbesondere Küchenmöbelsystem, bestehend aus einem selbsttragenden Grundgerüst (12) mit über Verbindungselementen (16) miteinander verbundenen Rohren (18, 22) und/oder Profilen
wobei die Verbindungselemente (16) aus einem Formteil bestehen, das selbst als Rohr und/oder weitgehend geschlossenes Hohlprofil ausgebildet ist, an welchem zumindest ein seitlich abstehender Ansatz (20), der sich über die gesamte Länge des Verbindungselementes (16) erstreckt, ausgebildet ist **dadurch gekennzeichnet, daß** die Verbindungselemente (16) selbst als die Rohre (18) und/oder Profile streckenweise ersetzende vertikale Bauelemente im Grundgerüst (12) integriert sind und daß die Rohre (18) und/oder Profile, die in das Verbindungselement (16) reichen, sich nicht über die gesamte Länge des Verbindungselements (16) erstrecken.

2. Möbelsystem nach Anspruch 1, **dadurch gekennzeichnet, daß** die horizontalen Rohre (22) und/oder Profile, sowie Platten, Rahmen etc. des Grundgerüsts am Ansatz des Verbindungselements (16) befestigt sind.

3. Möbelsystem nach Anspruch 1 oder 2, **dadurch gekennzeichnet, daß** das Verbindungselement (16) im Querschnitt die Form eines asymmetrischen Tropfens oder davon abgewandelte Formen aufweist.

4. Möbelsystem nach einem der Ansprüche 1-3, **dadurch gekennzeichnet, daß** das Verbindungselement (16) ein rundes oder mehreckiges Hohlprofil aufweist, das jeweils an die Form der miteinander zu verbindenden Rohre angepaßt ist.

5. Möbelsystem nach einem der Ansprüche 1-4, **dadurch gekennzeichnet, daß** das Verbindungselement (16) auf einer Seite des Ansatzes eine Ausnehmung (21) zur bündigen Aufnahme von Bauteilen, wie beispielsweise Wandelementen, aufweist.

6. Möbelsystems nach einem der Ansprüche 1-5, **dadurch gekennzeichnet, daß** an der nach außen liegenden Fläche des Ansatzes (20) Verzierungen aufgebracht, beispielsweise eingraviert und/oder aufgedruckt sind.

7. Möbelsystem nach einem der Ansprüche 1-6, **dadurch gekennzeichnet, daß** mit dem Verbindungselement (16) Montageplatten (50) verbindbar sind, die genormte Bohrungen, Schraubbohrungen (74), Ausnehmungen (78,80) und/oder Nuten aufweisen, die zur Aufnahme der zu montierenden Bauteile und Beschläge dienen.

8. Möbelsystem nach einem der Ansprüche 1-7, **dadurch gekennzeichnet, daß** das Verbindungselement (16) mehrteilig ausgebildet ist.

9. Möbelsystem nach Anspruch 8, **dadurch gekennzeichnet, daß** das Verbindungselement (16) insgesamt eine Tropfenform aufweist, wobei das Verbindungselement eine Sichtblende (72) umfaßt, die von außen aufklemmbar ist, um Schrauben einer Schraubverbindung zu verdecken.

10. Möbelsystem nach Anspruch 8, **dadurch gekennzeichnet, daß** das Verbindungselement (51) aus einem Hohlprofil (122) mit einer sich über seine Länge erstreckende Formausnehmung und einem Ansatz (124) mit entsprechendem Formansatz (126) zur formschlüssigen Verbindung der beiden Teile besteht.

## Claims

1. Furniture system, in particular kitchen-furniture system, comprising a self-supporting basic structure (12) with profiles and/or tubes (18, 22) connected to one another via connecting elements (16), the connecting elements (16) comprising a moulding which is itself designed as a tube and/or largely closed hollow profile on which is formed at least one laterally projecting extension (20), which extends over the entire length of the connecting element (16), **characterized in that** the connecting elements (16) themselves are integrated in the basic structure (12) as vertical structural elements which replace the tubes (18) and/or profiles in certain sections, and **in that** the tubes (18) and/or profiles extending into the connecting element (16) do not extend over the entire length of the connecting element (16).

2. Furniture system according to Claim 1, **characterized in that** the horizontal tubes (22) and/or profiles and plates or panels, frames, etc. of the basic structure are fastened on the extension of the connecting element (16).

3. Furniture system according to Claim 1 or 2, **characterized in that** the connecting element (16) is in the form of an asymmetric droplet, or modifications thereof, in cross section.

4. Furniture system according to one of Claims 1 - 3, **characterized in that** the connecting element (16) has a round or polygonal hollow profile which is adapted in each case to the shape of the tubes which are to be connected to one another.

5. Furniture system according to one of Claims 1 - 4, **characterized in that** the connecting element (16), on one side of the extension, has a recess (21) for accommodating structural parts, for example wall elements, in a flush manner.

6. Furniture system according to one of Claims 1 - 5, **characterized in that** decoration is applied to the outer surface of the extension (20), for example is engraved therein and/or printed thereon.

7. Furniture system according to one of Claims 1 - 6, **characterized in that** installation plates (50) can be connected to the connecting element (16), and these plates have standard bores, screw-connection bores (74), recesses (78, 80) and/or grooves which serve for accommodating the fittings and structural parts which are to be installed.

8. Furniture system according to one of Claims 1 - 7, **characterized in that** the connecting element (16) is designed in a number of parts.

9. Furniture system according to Claim 8, **characterized in that** the connecting element (16) is in the form of a droplet overall, the connecting element comprising a screen (72) which can be clamped on from the outside in order to conceal screws of a screw connection.

10. Furniture system according to Claim 8, **characterized in that** the connecting element (51) comprises a hollow profile (122) with a shaped recess extending over its length and also an extension (124) with corresponding shaped extension (126) for the form-fitting connection of the two parts.

## Revendications

1. Système de meubles, en particulier système de meubles de cuisine, comprenant une structure de base (12) autoportante avec des tuyaux (18, 22) reliés entre eux par des éléments de liaison (16) et/ou des profilés, les éléments de liaison (16) comprenant une partie moulée qui est conçue comme un tuyau et/ou un profilé creux largement fermé, sur lequel est réalisée au moins une embase (20) débordant sur le côté, qui s'étend sur toute la longueur de l'élément de liaison (16), **caractérisé en ce que** les éléments de liaison (16) sont intégrés dans la structure de base (12) en tant qu'éléments de construction verticaux et remplaçant les tuyaux (18) et/ou les profilés par endroits, et **en ce que** les tuyaux (18) et/ou les profilés, qui vont dans l'élément de liaison (16), ne s'étendent pas sur toute la longueur de l'élément de liaison (16).

2. Système de meubles selon la revendication 1, **caractérisé en ce que** les tuyaux (22) horizontaux et/ou les profilés, ainsi que les plaques, les cadres, etc., de la structure de base sont fixés sur l'embase de l'élément de liaison (16).

3. Système de meubles selon la revendication 1 ou 2, **caractérisé en ce que** l'élément de liaison (16) présente en coupe transversale la forme d'une goutte asymétrique ou des formes modifiées par rapport à celle-ci.

4. Système de meubles selon l'une quelconque des revendications 1 à 3, **caractérisé en ce que** l'élément de liaison (16) présente un profilé creux rond ou polygonal, qui est adapté respectivement à la forme des tuyaux à relier entre eux.

5. Système de meubles selon l'une quelconque des revendications 1 à 4, **caractérisé en ce que** l'élément de liaison (16) présente sur un côté de l'embase un évidement (21) pour le logement en affleurement d'éléments de construction, comme par exemple des éléments de paroi.

6. Système de meubles selon l'une quelconque des revendications 1 à 5, **caractérisé en ce que** des décorations sont appliquées, par exemple gravées à l'intérieur et/ou imprimées dessus, sur la surface disposée vers l'extérieur de l'embase (20).

7. Système de meubles selon l'une quelconque des revendications 1 à 6, **caractérisé en ce que** des plaques de montage (50) peuvent être reliées à l'élément de liaison (16), lesquelles plaques présentent des perçages normalisés, des perçages de vis (74), des évidements (78, 80) et/ou des rainures qui servent au logement des éléments de construction et ferrures à monter.

8. Système de meubles selon l'une quelconque des revendications 1 à 7, **caractérisé en ce que** l'élément de liaison (16) est conçu en plusieurs parties.

9. Système de meubles selon la revendication 8, **caractérisé en ce que** l'élément de liaison (16) présente globalement une forme de goutte, l'élément de liaison comprenant un cache (72) qui peut être pincé dessus par l'extérieur afin de masquer des vis d'un assemblage vissé.

10. Système de meubles selon la revendication 8, **caractérisé en ce que** l'élément de liaison (51) comprend un profilé creux (122) avec un évidement moulé s'étendant sur sa longueur et une embase (124) avec une embase moulée (126) appropriée pour la liaison par conjugaison de forme des deux parties.
